**Europäisches Patentamt**

**European Patent Office**

**Office européen des brevets**

(19)

(11) Numéro de publication: **0 170 579**
**B1**

# (12) FASCICULE DE BREVET EUROPEEN

(45) Date de publication du fascicule du brevet:
**08.02.89**

(21) Numéro de dépôt: **85401379.4**

(22) Date de dépôt: **08.07.85**

(51) Int. Cl.⁴: **C 01 B 33/193**

(54) **Silice à prise d'huile élevée et à structure primaire controlée et procédé pour son obtention.**

(30) Priorité: **11.07.84 FR 8411004**

(43) Date de publication de la demande:
**05.02.86 Bulletin 86/6**

(45) Mention de la délivrance du brevet:
**08.02.89 Bulletin 89/6**

(84) Etats contractants désignés:
**AT BE CH DE FR GB IT LI LU NL SE**

(56) Documents cités:
**FR-A- 1 054 175**
**FR-A- 2 353 486**
**GB-A- 1 044 019**
**US-A- 4 127 641**

(73) Titulaire: **RHONE-POULENC CHIMIE, 25, quai Paul Doumer, F-92408 Courbevoie Cédex (FR)**

(72) Inventeur: **Chevallier, Yvonick, 19, allée des Géraniums, F-69150 Decines (FR)**

(74) Mandataire: **Dubruc, Philippe et al, RHONE-POULENC INTERSERVICES Service Brevets Chimie 25, quai Paul-Doumer, F-92408 Courbevoie Cédex (FR)**

# Description

La présente invention a pour objet une silice à prise d'huile élevée et à structure primaire élevée.

Elle concerne également un procédé qui permet notamment son obtention.

On sait que, d'une manière générale, la précipitation de la silice correspond à un ensemble complexe de phénomènes qui met en jeu plusieurs actes chimiques et notamment une polycondensation et un phénomène de floculation, ces deux actes entrant volontiers en compétition.

Par ailleurs, on sait que le vocable silice précipitée recouvre un produit dont la morphologie est variable, en prenant en compte simplement les particules ultimes ou billes élémentaires telles que l'on peut les apprécier au microscope électronique (selon R.K. ILER – The Chemistry of Silica – John WILEY & Sons – 1979 p. 465).

Ces billes peuvent varier en taille. Elles peuvent conduire à des états d'association différents sous forme d'agrégats (tels que définis par Ralph K. ILER, p. 477) et d'ensembles à liaisons plus faibles, ce qui conduit à une grande diversité de morphologies de types amorphes. Les agrégats peuvent être caractérisés en particulier par leur taille, leur facteur de forme et leur surface. Il existe ainsi non une silice mais une infinité de silices dont le comportement ne peut pas être prévu, d'autant que la chimie de surface est une autre caractéristique importante.

Lors de l'obtention de ces silices, il est possible de faire intervenir un grand nombre de paramètres, tels que concentrations en divers réactifs, pH, temps, température, etc. . .

Or, depuis longtemps, on a cherché à isoler les divers actes chimiques.

Ainsi, dès 1951, dans l'US 2 731 326, il est enseigné de former d'abord un sol par addition d'une solution d'acide sulfurique à une solution de silicate, puis de chauffer le sol afin d'accroître la taille des particules jusqu'à 5 à 7 nm.

Enfin, il est procédé à une addition simultanée d'une solution d'acide et d'une solution de silicate à pH constant, de sorte à réaliser la précipitation et à déposer le reste de la silice sur le précipité (ILER p. 558)

Dans le même esprit, dans les US 3 954 944 et 4 127 641, on procède à une addition simultanée d'acide sulfurique et de solution de silicate sur un pied de cuve aqueux avec obtention d'un sol, mûrissement du sol, floculation du sol avec introduction d'un électrolyte alcalin, mûrissement du produit de floculation, addition complémentaire d'acide seul ou d'acide et de silicate.

On voit que le mode opératoire est complexe, surtout au regard des propriétés des produits décrits qui restent difficiles à apprécier.

Ainsi, d'une manière générale, en dépit d'efforts importants réalisés depuis longtemps, on n'est pas parvenu, jusqu'à ce jour, à proposer un procédé permettant d'isoler les actes chimiques et à les contrôler suffisamment pour contrôler notamment la structure primaire des silices.

Or, maintenant on a trouvé un procédé selon lequel on fait réagir une solution aqueuse d'un silicate alcalin avec un agent acidifiant en formant un pied de cuve renfermant une substance aqueuse, par addition simultanée de l'agent acidifiant et de la solution de silicate alcalin et qui se caractérise par le fait qu'il comprend les étapes suivantes:

a) addition à volume constant des réactifs et soutirage en continu du milieu de réaction de manière à obtenir dans le volume constant un colloïde sphérique monodisperse en diamètre et dans le soutirage un colloïde de silice polydisperse en diamètre

b) réaction d'au moins une partie du produit obtenu avec un électrolyte

c) consolidation du produit issu de l'étape b) par addition d'une solution de silicate et d'un agent acidifiant.

Par colloïdes, on entendra des sols consistant en de fines particules selon la définition donnée par Ralph K. ILER – The Chemistry of Silica John WILEY & Sons – 1979 p. 415).

La polydispersité est appréhendée de façon connue (voir MYSELS – Introduction to Colloid Chemistry – Interscience Publisher New York).

Les caractéristiques des colloïdes dépendent évidemment d'un certain nombre de paramètres.

Avantageusement, on les obtient en mettant en œuvre un silicate de rapport pondéral $SiO_2/Na_2O$ compris entre 2 et 4.

La concentration en silice dans le colloïde doit être telle que l'agglomération des particules colloïdales soit évitée.

La température est avantageusement comprise entre 50 et 100 °C.

Un facteur important réside dans le temps de séjour.

On observe que le diamètre des colloïdes dépend du temps de séjour.

Un autre facteur important est la durée de la réaction.

On observe en particulier qu'il y a établissement d'un régime stationnaire au bout d'un certain temps, après le début du soutirage.

Lorsque l'état stationnaire est atteint, il n'existe plus de différence entre les deux types de colloïdes et on obtient de façon continue un colloïde.

En particulier, à l'étape a), on peut obtenir des colloïdes monodisperses de facteur de forme sphérique, et de diamètre moyen compris entre 10 et 100 nm et de facteur de polydispersité compris entre 1 et 1,2 dans le volume constant, des colloïdes polydisperses de diamètre moyen également compris entre 10 et 100 nm, de forme sphérique mais d'indice de polydispersité avantageusement compris entre 1,2 et 4 dans le soutirage.

On peut aussi obtenir des tailles de billes beaucoup plus élevées, aptes à sédimenter et qui peuvent atteindre des tailles allants jusqu'à 300 nm.

On peut donc jouer très largement sur le colloïde et par exemple mélanger des fractions différentes pour un même séjour ou des colloïdes obtenus avec des temps de séjour différents.

C'est donc sur l'une ou l'autre, ou l'une et l'autre des fractions issues du volume constant et/ou du soutirage que l'on réalise l'étape b), avant ou à partir de l'établissement du régime stationnaire.

L'électrolyte mis en œuvre est de tout type et est notamment constitué par un sel métallique, tel que de métal alcalin ou alcalino-terreux.

Mais bien évidemment, on ne sortirait pas du cadre de la présente invention en faisant appel à un sel de métal différent tel que terre rare ou autre.

L'étape b) est avantageusement réalisée à un pH compris entre 6 et 10, à une concentration en silice comprise entre 20 et 100 g/l et à une température comprise entre 20 et 100 °C.

L'étape c) est avantageusement effectuée par addition simultanée de la solution de silicate et de l'agent acidifiant à pH constant, compris entre 6 et 10 et à une température comprise entre 50 et 100 °C.

La suspension obtenue à l'issue de l'étape c) est filtrée, lavée et séchée.

Un moyen de séchage avantageux consiste à mettre en œuvre un procédé d'après le FR-A-2 257 326 selon lequel on forme un écoulement puits-tourbillon symétrique, avec un gaz chaud à grande quantité de mouvement et on introduit la suspension à sécher selon l'axe de symétrie de rotation de cet écoulement, dans la zone de dépression relative de cet écoulement, la quantité de mouvement dudit écoulement puits-tourbillon symétrique par rapport au flux axial de la suspension étant suffisante pour provoquer la rupture du flux axial, sa dispersion, sa prise en charge et son séchage.

Le procédé selon l'invention permet donc l'accès à un grand nombre de silices selon le caractère plus ou moins polydisperse du colloïde de l'étape a) et selon son diamètre moyen.

Le procédé selon l'invention permet en particulier d'accéder à des silices nouvelles. Celles-ci présentent, pour une valeur donnée de la surface spécifique des valeurs élevées de la prise d'huile et de l'aire projetée moyenne de l'agrégat.

Ainsi, l'invention couvre des silices de diamètre moyen en nombre des billes élémentaires compris entre 10 et 100 nm et d'aire projetée moyenne en nombre de l'agrégat exprimée en $nm^2$, supérieure à 8000, de préférence à 15 000 et avantageusement comprise entre 20 000 et 100 000.

Notamment, l'invention a trait à des silices présentant un volume poreux inter-agrégat élevé supérieur à 1 $cm^3$/g et présentant une population de pores inter-agrégat homogène.

Les surfaces spécifiques et les prises d'huiles peuvent varier largement pour ces mêmes types de silice mais on peut notamment obtenir des silices de surface spécifique CTAB comprise entre 20 et 120 $m^2$/g, de prise d'huile comprise entre 250 et 500 ml/100 g, d'aire projetée des agrégats supérieure à 8000 et de préférence à 15 000 $nm^2$.

Enfin, sur ces mêmes silices, on peut observer des densités apparentes, comprises entre 0,05 et 0,25.

Bien évidemment, la présente invention n'est pas limitée aux silices qui viennent d'être décrites et on peut notamment obtenir des silices présentant des billes élémentaires plus importantes.

Selon l'invention

La surface C.T.A.B. est la surface externe appréciée par absorption de bromure de cétyl triméthyl ammonium à pH = 9 selon la méthode exposée par JAY, JANSEN et C. KRAUS dans «Rubber Chemistry and Technology 44 (1971) p. 1287–1296.

Le volume spécifique Vo est déterminé comme suit:

– dans une matrice de diamètre intérieur égal à 25 mm et de hauteur égale à 80 mm, on ajoute 3 g de silice, puis dispose au-dessus un piston sur lequel on ajoute un poids déterminé de manière à exercer sur la silice une pression de 4 $10^5$ Pa. Le volume spécifique de la silice est alors mesuré. C'est le volume «$V_o$» exprimé en $cm^3$/g (volume initial).

La prise d'huile est appréciée selon la méthode décrite dans la norme française NF.T 30-022 (Mars 1953) en mettant en œuvre comme huile du phtalate de dibutyle sur 5 g de silice.

Le pH est mesuré selon la norme DIN 53200, la densité apparente tapée répond à la norme NF.A 95–112, la densité apparente est également indiquée mesurée sans tassement.

La polydispersité des particules élémentaires est le rapport du diamètre moyen en poids (dw) sur le diamètre moyen en nombre (dn).

Les diamètres moyens sont calculés comme indiqué par Joseph T. BAILEY et Al. (Average Quantities in Colloïd Science – Journal of Chemical Education – Vol. 39, N° 4, April 1962 – p. 196–200).

L'aire moyenne de l'agrégat a été déterminée selon la norme ASTM D 3849–80, adaptée au caractère spécifique de la silice en désagglomérant la silice par broyage d'une pâte constituée de 100 mg de poudre de silice sèche pour 0,5 ml de glycérine et en diluant ensuite cette pâte dans 300 ml d'eau à pH = 3.

La détermination du volume poreux inter-agrégat et la détermination de la population des pores correspondant à ce volume sont effectuées à l'aide d'un porosimètre à mercure (porosimètre utilisé: «pore sizer» 9300 de COULTRONICS). On fait pénétrer le mercure dans les pores de l'échantillon dégazé et on établit ainsi une courbe de porosité représentant l'évolution du volume des pores en fonction de la pression ou du rayon des pores. Cette courbe de porosité est établie selon la méthode exposée par N.M. WILNSLOW et J.J. SHAPIRO dans ASTM BULLETIN, page 39, Février 1959.

L'empilement des agrégats crée une porosité inter-agrégat dont le remplissage par le mercure va se traduire par l'apparition d'une marche sur la courbe de porosité. La hauteur de cette marche permet d'accéder au volume poreux inter-agrégat. L'inclinaison de la marche reflète la dispersion de la population des pores. La courbe dérivé présente un aspect de pic d'autant plus fin que la population des pores inter-agrégat est plus homogène.

Bien évidemment, les silices selon l'invention peuvent avoir toute application, telle que charge renforçante ou agent épaississant.

Mais la présente invention sera plus aisément comprise à l'aide des exemples suivants, donnés à titre purement illustratif.

Dans tous les exemples, le séchage est réalisé au moyen d'un dispositif à écoulement puits-tourbillon symétrique selon le FR-A 2 257 326, avec un gaz à une température de 500 °C à l'entrée et de 150 °C en sortie.

Les figures 1, 2 et 3 sont des photographies d'agrégats.

Les figures 4 et 5 montrent les courbes d'absorptions au mercure représentant l'évolution du volume cumulé V en fonction du diamètre des pores D et leurs dérivés dv/dD pour des noirs de carbone N 326 et N 347.

La figure 6 illustre les courbes similaires d'absorption pour une silice selon l'invention. Les courbes en trait plein correspondent au volume absorbé en cm$^3$/g et les courbes en pointillés correspondent aux dérivés des premiers.

## Exemple 1

Le premier stade réactionnel consiste en la préparation d'un sol de silice monodisperse de diamètre moyen en nombre de 62 mm.

On dispose pour cela d'un réacteur d'un volume de 20 l muni d'un système de chauffage par double enveloppe et d'un système d'agitation par turbine. Le réacteur comporte un système permettant d'assurer l'évacuation en continu d'un liquide réactionnel dès que le volume de liquide atteint une valeur fixée. Un ensemble de pompes doseuses permet d'assurer l'alimentation des réactifs.

On introduit dans le réacteur 8 l d'eau distillée, on porte la température à 90 °C. On agite par l'intermédiaire de la turbine (vitesse de rotation 400 tours/minute) et on procède à l'introduction simultanée:

– d'une solution aqueuse de silicate de sodium diluée (Rapport pondéral: SiO$_2$/Na$_2$O = 3,25; [SiO$_2$] = 40 g/l) à raison de 67 ml par minute,
– d'une solution aqueuse d'acide sulfurique ([H$_2$SO$_4$] = 17 g/l) à raison de 67 ml par minute.

L'arrivée d'acide est réalisée en un point nettement distinct de l'arrivée de la solution de silicate. Après 10 minutes d'alimentation simultanée des deux réactifs, le soutirage est mis en route de façon à maintenir un volume sensiblement constant dans le réacteur (soit 9,3 l); on réalise ainsi dans le réacteur la formation et la croissance en taille d'un colloïde silicique sphérique.

A chaque instant, on dispose ainsi:

– d'un colloïde de silice sphérique monodisperse en taille de diamètre présent dans le réacteur (colloïde A)

– d'un colloïde de silice sphérique polydisperse en taille de diamètre moyen en nombre inférieur à celui du colloïde A (colloïde B).

Les caractéristiques du colloïde A sont les suivantes:

| Temps | [SiO$_2$ g/l] | Diamètre moyen | |
|---|---|---|---|
| | | En nombre dn nm | En poids dw nm |
| 1 heure | 16 | 17,5 | 18,3 |
| 2 heures | 16,2 | 22,2 | 22,6 |
| 3 heures | 20,8 | 30 | 31,4 |
| 4 heures | 21,6 | 38,3 | 39,3 |
| 5 heures | 23,6 | 50 | 51,6 |
| 6 heures | 23,5 | 62,1 | 62,9 |

## Deuxième stade réactionnel

Sept litres du colloïde présent dans le réacteur (dn = 62,1 nm) sont mis en œuvre pour accéder à la silice. On introduit sur ces 7 litres maintenus à 90 °C et agités à 400 tr/min, de l'acide sulfurique ([H$_2$SO$_4$] = 34 g/l) à raison de 22,6 ml/min et cela pendant 5 minutes. On introduit ensuite en 2 minutes 2,6 litres de solution aqueuse de Na$_2$SO$_4$ contenant 350 g par litre de Na$_2$SO$_4$. On laisse mûrir le mélange obtenu pendant 10 minutes.

## Troisième stade réactionnel

On introduit sur le mélange obtenu une solution aqueuse de silicate de sodium (Rapport pondéral: SiO$_2$/Na$_2$O = 3,25; [SiO$_2$] = 75 g/l) à raison de 25,1 ml par minute et cela pendant 90 minutes.

Deux minutes après le début de l'introduction du silicate, on introduit simultanément une solution aqueuse d'acide sulfurique ([H$_2$SO$_4$] = 34 g/l) à un débit de 22,6 ml par minute et cela pendant 88 minutes. Pendant tout le temps où l'acide et le silicate aqueux sont introduits en même temps, le pH est maintenu à 8,0 ± 0,2 (mesuré à 90 °C) et la température est maintenue à 90 °C.

Le déroulement des stades 2 et 3 peut être schématisé de la façon suivante:

| Temps minutes | 0 | 5 | 7 | 17 | 19 | 107 | 130 |
|---|---|---|---|---|---|---|---|
| Silicate aqueux | | | | | | 25,1 ml/min | |
| H$_2$SO$_4$ dilué | | 22,6 ml/min | | | | 26 ml/min | |

Solution
de Na$_2$SO$_4$  2,61

Température

| | |
|---|---|
| 90 °C | 90 °C |

La suspension de silice obtenue en fin de réaction présente un pH de 3,5. Elle est filtrée puis lavée et séchée.

La silice séchée a les caractéristiques suivantes

| | | |
|---|---|---|
| – Surface spécifique C.T.A.B. | 23 | m$^2$/g |
| – Surface spécifique B.E.T. | 30 | m$^2$/g |
| – pH à 5% dans l'eau | 6,9 | |
| – Vo | 3,64 | cm$^3$/g |
| – Prise d'huile DBP | 300 | ml/100 g de silice |
| – Densité apparente | 0,19 | g/cm$^3$ |
| – Densité apparente tapée | 0,23 | g/cm$^3$ |

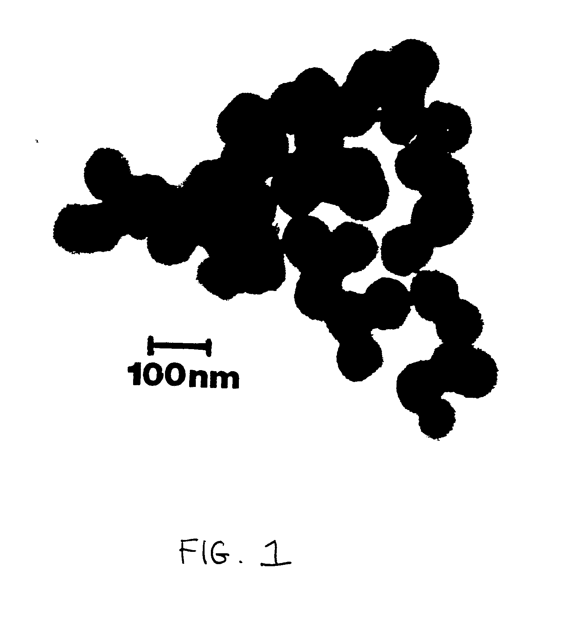

Dans les agrégats de silice, la particule élémentaire sphérique est bien définie et monodisperse comme le montre la figure 1.

L'aire projetée moyenne des agrégats est de 87 000 nm$^2$.

Exemple 2

On prépare au terme d'une réaction en 3 stades une silice présentant les caractéristiques suivantes:

| | | |
|---|---|---|
| – Surface spécifique C.T.A.B. | 89 | m$^2$/g |
| – Surface spécifique B.E.T. | 109 | m$^2$/g |
| – Vo | 4,9 | cm$^3$/g |
| – Prise d'huile DBP | 492 | ml/100 g de silice |
| – Densité apparente | 0,072 | g/cm$^3$ |
| – Densité apparente tapée | 0,085 | g/cm$^3$ |
| – pH | 7,2 | |

L'aire moyenne projetée en nombre des agrégats est de 12 000 nm$^2$. Les particules élémentaires sphériques présentes dans les agrégats ont un diamètre moyen en nombre de 27 nm et un indice de polydispersité égal à 1,16.

Premier stade réactionnel

Le premier stade réactionnel consiste en la préparation d'un colloïde de silice sphérique polydisperse de diamètres s'échelonnant entre 15 et 50 nanomètres et de diamètre moyen en nombre égal à 26 nanomètres.

La préparation de ce colloïde sphérique est réalisée comme décrit au premier stade réactionnel de l'exemple 1, mais en apportant les modifications suivantes aux conditions de réaction:

– on pratique la réaction à 78 °C ± 1 °C au lieu de 90 °C

– on procède au soutirage à partir de la 25ème minute après le début de l'addition simultanée d'acide sulfurique aqueux et de silicate de sodium aqueux, de façon à maintenir dans le réacteur un volume liquide constant et égal à 11,3 litres.

On accumule le liquide réactionnel soutiré entre 2 heures 30 minutes et 5 heures 30 minutes. L'examen par microscopie électronique à transmission et l'examen par diffusion de lumière montrent qu'il s'agit d'un colloïde sphérique de silice polydisperse de diamètres s'échelonnant entre 15 et 55 nanomètres.

La concentration en silice est de 18 g de SiO$_2$ par litre.

Deuxième stade réactionnel

On introduit dans un réacteur de 20 l décrit à l'exemple 1, une partie (8 litres) du liquide réactionnel accumulé par soutirage entre 2 heures 30 minutes et 5 heures 30 minutes. Ce colloïde est porté à 90 °C dans un réacteur de 20 l. On ajoute ensuite une solution aqueuse de Na$_2$SO$_4$, de façon à avoir une suspension aqueuse de silice contenant 0,37 mole par litre de Na$_2$SO$_4$. On effectue un mûrissement sous agitation pendant 10 minutes.

Troisième stade réactionnel

Dans la suspension obtenue,maintenue sous agitation à 90 °C, on introduit pendant 60 minutes, et de façon simultanée, du silicate de sodium aqueux ([SiO$_2$] = 40 g/l; rapport pondéral: SiO$_2$/Na$_2$O = 3,25) à un débit moyen de 40 ml/minute et de l'acide sulfurique aqueux dilué ([H$_2$SO$_4$] = 17 g/l) à un débit moyen de 40 ml par minute.

En fin de réaction, le pH de la bouillie est amené à 3,5 avec de l'acide sulfurique dilué. Après filtration, lavage et séchage, on obtient la silice dont les caractéristiques sont données ci-dessus.

Exemple 3

On obtient au terme d'un processus en 3 stades une silice présentant les caractéristiques suivantes:

| | | |
|---|---|---|
| – Surface C.T.A.B. | 103 | m$^2$/g |
| – Surface B.E.T. | 120 | m$^2$/g |

L'examen M.E.T. montre que la structure primaire est constituée d'agrégats de billes élémentaires bien définies de diamètre moyen en nombre = 27 nm et d'indice de polydispersité égal à 1,04.

| | | |
|---|---|---|
| – Prise d'huile DBP | 460 | ml/100 g |
| – Vo | 4,71 | cm$^3$/g |
| – pH | 5,2 | |
| – Densité apparente | 0,070 | g/cm$^3$ |
| – Densité apparente tapée | 0,084 | g/cm$^3$ |

On réalise la formation et la croissance d'un colloïde comme indiqué dans l'exemple 1 pour le colloïde A. On met en route le soutirage 3 minutes après le début de l'alimentation simultanée des deux réactifs. Après 2 h 30, on dispose dans le réacteur (20 l) d'un colloïde (8 litres) de silice de diamètre moyen dn = 25 nm ([SiO$_2$] = 20 g/l). Sur ce colloïde à 90 °C, on introduit du sulfate de sodium de façon à avoir un mélange aqueux de 0,37 mole par litre de $Na_2SO_4$. On effectue ensuite un mûrissement, sous agitation, pendant 65 minutes. On introduit sur le mélange obtenu, par addition simultanée, 60 minutes, de l'acide et du silicate diiués selon l'exemple précédent. On obtient la silice dont les caractéristiques sont indiquées ci-dessus.

Exemple 4

On réalise la formation et la croissance d'un colloïde comme indiqué dans l'exemple 1 pour le colloïde A. On met en route le soutirage 3 minutes après le début de l'alimentation. Après 2 h 30, on dispose dans le réacteur (volume = 20 l) d'un colloïde de silice de diamètre moyen en nombre = 27 nm ($SiO_2$ = 20 g/l$^{-1}$). Sur cette suspension de silice (8 litres) maintenue à 90 °C, on introduit en 3 minutes, 3 litres de solution aqueuse contenant 1070 g de $Na_2SO_4$. On effectue ensuite, pendant 10 minutes, un mûrissement sous agitation. On procède ensuite à une addition simultanée (durée = 60 minutes) d'acide sulfurique dilué et de silicate de sodium dilué avec les réactifs et dans les conditions indiquées à l'exemple 2. La poudre de silice obtenue après filtration, lavage et séchage présente les caractéristiques suivantes:

| | | |
|---|---|---|
| – Surface B.E.T. | 111 | $m^2/g$ |
| – Surface C.T.A.B. | 107 | $m^2/g$ |
| – Volume spécifique sous 4 $10^5$ Pa | 4,8 | $cm^3/g$ |
| – Prise d'huile DBP | 465 | ml/100 g de silice |
| – pH | 6,5 | |
| – Densité apparente | 0,058 | $g/cm^3$ |
| – Densité apparente tapée | 0,067 | $g/cm^3$ |

L'examen M.E.T. et l'analyse d'images montrent que cette silice présente des agrégats dont les caractéristiques se situent entre un noir de carbone basse structure N 326 et un noir de carbone haute structure N 347.

| PRODUIT | Diamètre moyen (en nombre) des billes élémentaires | Aire projetée moyenne (en nombre) des agrégats en $nm^2$ |
|---|---|---|
| N 326 | 26 nm | 18 000 |
| N 347 | 25 nm | 26 000 |
| Silice | 27 nm | 22 000 |

Exemple 5

On prépare une suspension de silice colloïdale sphérique (diamètre moyen dn = 24 nm) contenant 36 g/l de silice. On procède à la formation de ce colloïde en 2 h 30 minutes comme il est décrit à l'exemple 1, (premier stade réactionnel) mais en utilisant des réactifs deux fois plus concentrés et en procédant à 80 °C. On procède ensuite à l'ajout de $Na_2SO_4$, de façon à avoir une concentration en sel égale à 0,37 mole par litre de suspension, après mûrissement de 65 minutes, on effectue l'ajout simultané d'acide et de silicate de sodium aqueux, à pH = 9 à 90 °C pendant 60 minutes. En fin de réaction le pH de la bouillie obtenue est amené à pH = 3,5, par addition d'acide sulfurique dilué. La silice obtenue après filtration, lavage et séchage, présente les caractéristiques suivantes:

| | | |
|---|---|---|
| – Surface spécifique C.T.A.B. | 90 | $m^2/g$ |
| – Surface spécifique B.E.T. | 120 | $m^2/g$ |
| – Vo | 4,52 | $cm^3/g$ |
| – Prise d'huile DBP | 420 | ml/100 g de silice |
| – Densité apparente | 0,083 | $g/cm^3$ |
| – Densité apparente tapée | 0,098 | $g/cm^3$ |
| – pH | 6,1 | |

L'examen en microscopie électronique à transmission montre que la structure primaire est constituée d'agrégats de billes élémentaires de silices bien définies, présentant une aire projetée moyenne en nombre des agrégats égale à 12 000 $nm^2$. Le volume poreux inter-agrégat déterminé par porosité au mercure est de 1,1 $cm^3/g$.

Exemple 6
Premier stade réactionnel

Le premier stade réactionnel consiste en la formation d'un colloïde de silice sphérique présentant un histogramme de diamètre étalé entre 12 et 60 nm, un diamètre moyen en nombre (dn) égal à 31 nm, un diamètre moyen en poids (dw) égal à 44 nm et un indice de polydispersité (dn/dw) égal à 1,40.

On procède comme pour le premier stade réactionnel de l'exemple 1, mais on s'intéresse au colloïde soutiré. On réunit ainsi l'ensemble du sol soutiré en 2 heures et 15 minutes, à partir du début du soutirage, on obtient ainsi 20 l de suspension colloïdale: fraction I. On réunit ensuite l'ensemble du colloïde soutiré entre 2 heures 15 minutes et 4 heures 30 minutes: fraction II. On procède enfin au mélange de 9,15 litres de la fraction I et de 0,85 litre de la fraction II. On obtient ainsi 10 litres de suspension de silice colloïdale dont l'examen par microscopie électronique à transmission conduit aux caractéristiques ci-dessus.

Deuxième stade réactionnel

Les 10 litres de colloïde sont portés à 90 °C dans un réacteur de 20 l. On introduit ensuite sur cette suspension, maintenue à 90 °C et agitée (400 tr/min), de l'acide sulfurique ([$H_2SO_4$] = 34 g/l) en 6 minutes 30 secondes, de façon à ramener le pH de 9 à 8. On introduit ensuite en une minute 1,76 litre de solution aqueuse de $Na_2SO_4$ contenant 350 g de $Na_2SO_4$ par litre. On laisse ensuite mûrir le mélange obtenu pendant 10 minutes et 30 secondes, sous agitation.

Troisième stade réactionnel

On introduit une solution aqueuse de silicate de sodium (Rapport pondéral: $SiO_2/Na_2O$ = 3,25;

[SiO$_2$] = 75 g/l), à raison de 27,5 ml/mn et cela pendant 100 minutes.

2 minutes et 30 secondes après le début de l'introduction du silicate, on introduit simultanément une solution aqueuse d'acide sulfurique ([H$_2$SO$_4$] = 34 g/l) à un débit de 30,1 ml/mn et cela pendant 97 minutes et 30 secondes. Pendant tout le temps où l'acide et le silicate aqueux sont introduits en même temps, le pH est maintenu à 8± 0,1 et la température est maintenue à 90 °C. Après l'arrêt de l'alimentation en silicate, on poursuit l'introduction d'acide pendant 12 minutes, de façon à atteindre un pH égal à 3,5.

Le déroulement des stades 2 et 3 peut être schématisé de la façon suivante:

Temps 0 6'30'' 7'30'' 18' 20'30'' 118' 130'

Silicate            27,5 ml/mm

Acide                 30,1 ml/mm

Na$_2$SO$_4$     1,76 l

350 g/l
pH     9    8   7,6     7,6   8,1    8,0   7,9   3,5

T °C   90                          90

La suspension de silice obtenue en fin de précipitation est filtrée, lavée et séchée.

La silice séchée a les caractéristiques suivantes:

- Surface C.T.A.B.       = 47    m$^2$/g
- Surface B.E.T.         = 58    m$^2$/g
- pH                    = 6,6
- Vo                   = 4,2    cm$^3$/g
- Prise d'huile DBP      = 378   ml/100 g de silice
- Densité apparente     = 0,11   g/cm$^3$
- Densité apparente tapée               = 0,135   g/cm$^3$

La caractérisation par microscopie électronique quantifiée par analyse d'image des agrégats conduit aux caractéristiques suivantes:

- diamètre moyen (dn) en nombre des billes élémentaires présentes dans les agrégats: 36 nm
- diamètre moyen en poids (dw) des billes élémentaires: 50 nm, indice de polydispersité dw/dn = 1,4
- aire projetée moyenne en nombre des agrégats : 15 000 nm$^2$

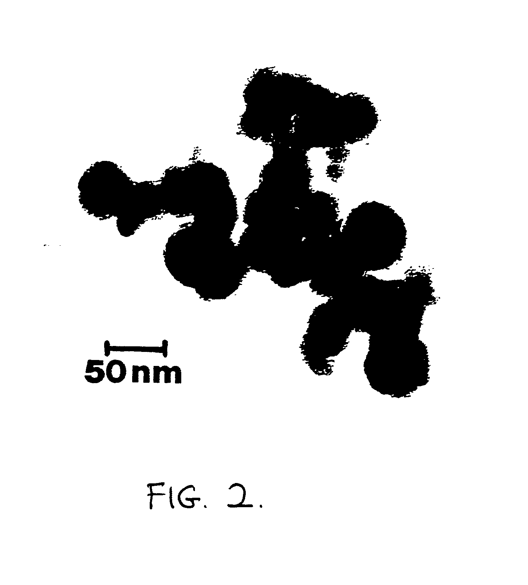

Les agrégats présentent l'aspect illustré figure 2.

Exemple 7

On réalise la formation et la croissance d'un colloïde de silice comme indiqué dans l'exemple 1 pour le colloïde A.

On met en route le soutirage environ 2 minutes après le début de l'alimentation des deux réactifs, celle-ci étant réalisée de façon à maintenir un pH égal à 9± 0,1 à 90°. Après 2 h 30, on dispose dans le réacteur (20 l) d'un colloïde (volume = 8 litres) de silice de diamètre moyen en nombre égal à 28 nm.

On procède au soutirage de deux litres de la suspension colloïdale. On introduit sur la suspension colloïdale restant dans le réacteur 2,25 l d'une solution aqueuse contenant 551,3 g de Na$_2$SO$_4$. Cette introduction est réalisée sous agitation en 2 minutes. On maintient ensuite sous agitation, pendant 10 minutes supplémentaires la suspension obtenue. On procède à l'addition simultanée (durée 75 minutes) d'acide sulfurique dilué ([H$_2$SO$_4$] = 17 g/l) et de silicate de sodium dilué ([SiO$_2$] = 40 g/l).

Le débit de silicate de sodium est maintenu entre 36 et 38 ml par minute. Le débit d'acide sulfurique dilué est réglé automatiquement de façon à maintenir dans le milieu un pH égal à 9± 0,1 à 90 °C. Après lavage, filtration et séchage. La poudre de silice obtenue présente les caractéristiques suivantes:

- Surface C.T.A.B.       = 85       m$^2$/g
- Surface B.E.T.         = 80       m$^2$/g
- Vo                   = 4,95    cm$^3$/g
- Prise d'huile DBP      = 406     ml/100g de silice.
- Densité apparente     = 0,098   g/cm$^3$
- Densité apparente tapée               = 0,117   g/cm$^3$
- pH                    = 5,2
- dn                   = 32       nm
- dw                  = 34       mm
- Aire projetée moyenne en nombre des agrégats     = 14 000     nm$^2$

Le volume poreux inter-agrégat déterminé par porosité au mercure est de 1,1 cm$^3$/g.

Exemple 8
Premier stade réactionnel

On dispose d'un réacteur de 20 l muni d'un système de chauffage par double enveloppe et d'un système d'agitation par turbine. Le réacteur comporte un système permettant d'assurer l'évacuation en continu d'un liquide réactionnel dès que le volume de liquide atteint une valeur fixée. Un ensemble de pompes doseuses permet d'assurer l'alimentation des réactifs.

On introduit dans le réacteur 8 litres d'eau; on porte la température à 90 °C. On agite par l'intermédiaire de la turbine (vitesse de rotation = 400 tours par minute) et on procède à l'introduction simultanée dans le liquide:

- d'une solution aqueuse de silicate de sodium diluée (Rapport pondéral: SiO$_2$/Na$_2$O = 3,25; [SiO$_2$] = 20 g/l), à raison de 120 ml par minute,
- de CO$_2$ à un débit réglé automatiquement à une valeur de l'ordre de 44 g/heure, de façon à maintenir le pH à 9,1 + 0,1 à 90 °C.

L'arrivée de CO$_2$ est réalisée en un point distinct de la solution de silicate.

Environ 2 minutes après le début de l'alimentation simultanée des deux réactifs, le soutirage est mis en route de façon à maintenir un volume constant dans le réacteur. On réalise ainsi dans le réacteur la formation et la croissance en diamètre d'un colloïde de silice sphérique. Après 2 heures 30 minutes, on arrête l'introduction des réactifs. Le colloïde de silice présent dans le réacteur a un diamètre moyen en nombre de 28 nm et un diamètre moyen en poids de 29 nm.

Deuxième stade réactionnel

Sur la suspension colloïdale obtenue au terme du premier stade réactionnel et maintenue à 90 °C, on introduit en trois minutes, deux litres de solution aqueuse (à 80 °C) contenant 90 g de $Na_2CO_3$ et 286 g de $NaHCO_3$. Cette suspension subit ensuite un mûrissement de 9 minutes à 90 °C, sous agitation.

Troisième stade réactionnel

On introduit dans la suspension aqueuse et de façon simultanée:

– du silicate de sodium aqueux (Rapport pondéral: $SiO_2/Na_2O$ = 3,25; $[SiO_2]$ = 20 g/l), à un débit de 87 ml/minute

– du $CO_2$ non dilué à un débit réglé automatiquement de façon à avoir un pH égal à 8,7 ± 0,1 (débit = 0,67 g/min).

Cette introduction simultanée dure 60 minutes.

La suspension de silice obtenue au terme du troisième stade réactionnel est filtrée, lavée et séchée. Les caractéristiques de la silice séchée sont les suivantes:

| | | |
|---|---|---|
| – Surface C.T.A.B. | = 85 | $m^2/g$ |
| – Surface B.E.T. | = 101 | $m^2/g$ |
| – pH | = 7,5 | |
| – Prise d'huile DBP | = 386 | ml/100 g de silice |
| – Vo | = 5,1 | $cm^3/g$ |
| – Densité apparente | = 0,071 | $g/cm^3$ |
| – Densité apparente tapée | = 0,083 | $g/cm^3$ |

L'examen par microscopie électronique des agrégats montre qu'ils sont constitués de billes de silice de diamètre moyen en nombre égal à 29 nm.

Exemple 9

On réalise la formation et la croissance d'un colloïde sphérique de silice monodisperse en diamètre comme indiqué dans l'exemple 1 pour le colloïde A mais avec la modification suivante: on procède au soutirage 2 minutes après le début de l'alimentation simultanée de l'acide sulfurique dilué et du silicate de sodium aqueux, celle-ci étant réalisée de façon à maintenir un pH égal à 9 ± 0,2 à 90 °C. Après 2 heures 30 minutes, on dispose dans le réacteur d'un colloïde sphérique monodisperse (volume = 8 litres) de silice. On descend le pH à 8 avec 300 ml d'$H_2SO_4$ dilué. On introduit ensuite dans cette suspension colloïdale maintenue sous agitation à 90 °C, 3 litres d'une solution aqueuse contenant 1050 g de $Na_2SO_4$. Cette introduction est réalisée en deux minutes. Le mélange obtenu est maintenu sous agitation (turbine à 110 tours par minute), à pH égal à 8 à 90 °C pendant 10 minutes.

On procède a l'addition simultanée (durée 65 minutes) d'acide sulfurique dilué ($[H_2SO_4]$ = 17,1 g/l) et de silicate de sodium dilué (rapport pondéral: $SiO_2/Na_2O$ = 3,25; $[SiO_2]$ = 40 g/l).

Le débit de silicate de sodium est maintenu à 37 ml par minute. Le débit d'acide sulfurique dilué est réglé automatiquement de façon à maintenir dans le milieu réactionnel un pH égal à 8 ± 0,1 à 90 °C.

La bouillie de silice obtenue est ensuite amenée à pH égal à 3,5 par addition d'acide sulfurique dilué. Après filtration, lavage et séchage, la poudre de silice obtenue présente les caractéristiques suivantes:

| | | |
|---|---|---|
| – Surface C.T.A.B | = 110 | $m^2/g$ |
| – Surface B.E.T. | = 110 | $m^2/g$ |
| – Vo | = 4,5 | $cm^3/g$ |
| – Prise d'huile DBP | = 400 | ml pour 100 g de silice |
| – Densité apparente | = 0,054 | $g/cm^3$ |
| – Densité apparente tapée | = 0,068 | $g/cm^3$ |
| – pH | = 6,9 | |

Dans le cas d'un séchage à l'étuve (15 h à 150 °C), on obtient une silice présentant une prise d'huile plus faible: 220 ml de DBP pour 100 g de silice.

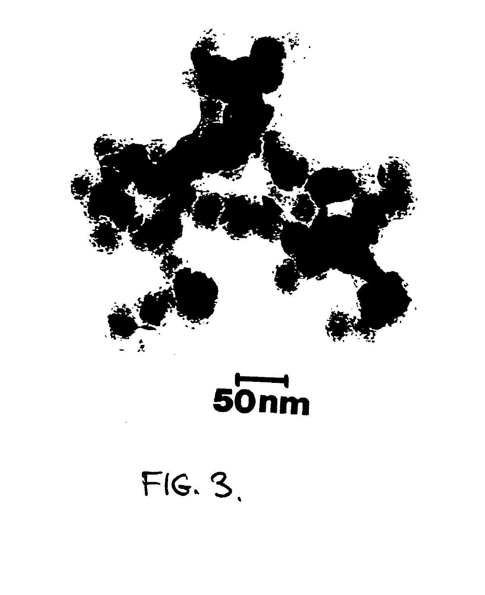

L'observation par microscopie électronique à transmission montre que les agrégats de silice sont constitués de particules élémentaires de silice sphérique soudées entre elles, bien définies, de diamètre moyen égal à 25 nanomètres. l'indice de polydispersité est égal à 1,04. L'aspect des agrégats est illustré figure 3.

L'analyse d'images montre que les agrégats présente une aire moyenne projetée de 27 000 $nm^2$.

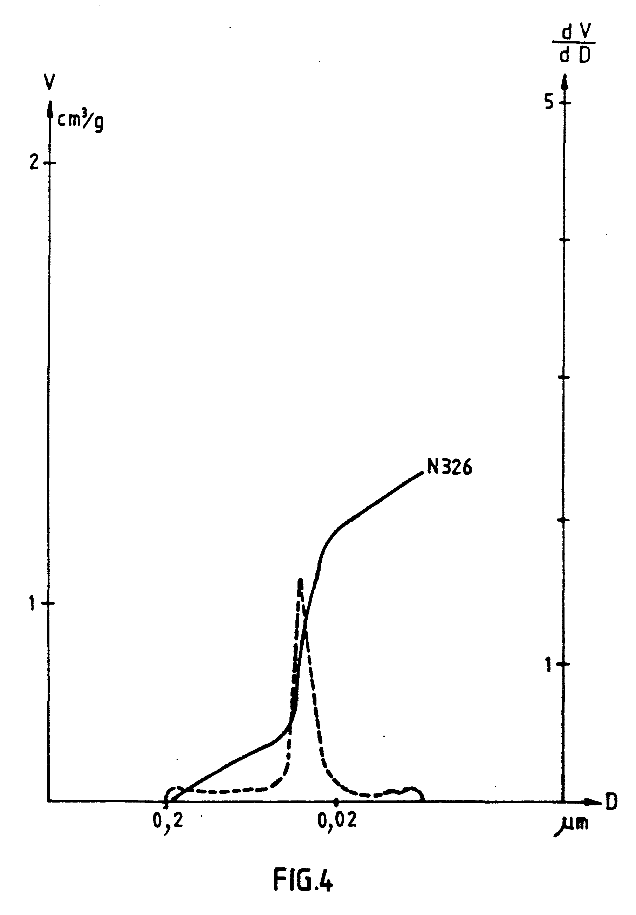

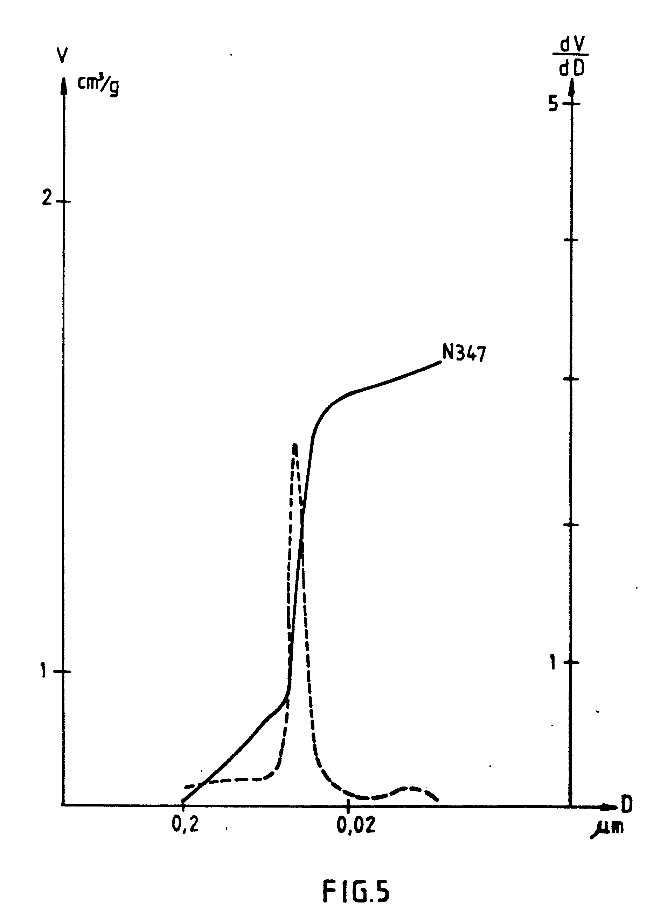

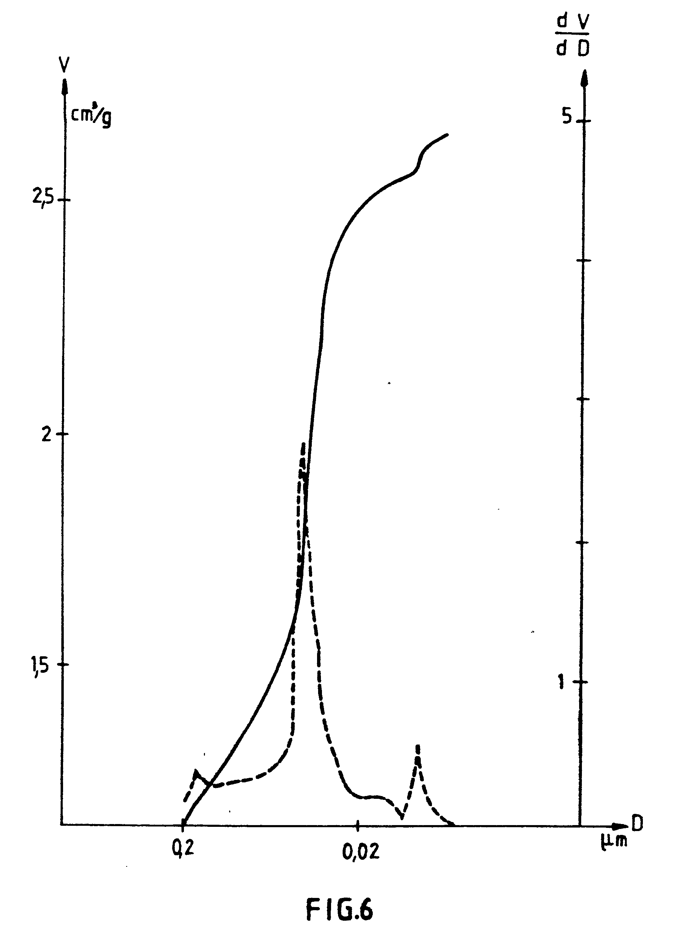

Les figures 4, 5 et 6 montrent les courbes de porosité, obtenues avec un porosimètre à mercure, pour les noirs de carbone N 326, N 347 et pour la silice préparée. Les noirs de carbone se caractérisent par une population de pores inter-agrégats très homogène, ce qui se traduit par un pic très étroit sur la dérivée de la courbe (courbe en trait discontinu). Cette caractéristique se retrouve parfaitement sur la courbe relative à la silice préparée selon l'invention. Cette silice possède un volume poreux, inter-agrégat supérieur à celui du noir de carbone N 347, tout en conservant sensiblement la même distribution de pores.

Les volumes poreux inter-agrégat sont les suivants:

| Produit | Volume poreux $cm^3/g$ |
|---|---|
| Silice selon l'invention | 1,5 |
| N 347 | 1 |
| N 326 | 0,7 |

Exemple 10

On prépare une silice de précipitation au terme de 3 opérations successives, réalisées de la façon suivante:

– la première étape est la formation d'un colloïde de silice sphérique monodisperse comme indiqué à l'exemple 7,

– la deuxième étape consiste en l'introduction dans la solution colloïdale présente dans le réacteur de 291 g de NaCl en solution dans 1 litre d'eau. Cette introduction est réalisée en 2 minutes. Le mélange réactionnel est ensuite maintenu à 90 °C sous agitation pendant 10 minutes.

– Lors de la troisième étape, on introduit dans le milieu réactionnel, de façon simultanée, pendant 90 minutes, du silicate de sodium aqueux (rapport pondéral: $SiO_2/Na_2O = 3,25$; $[SiO_2] = 40$ g/l) à un débit de 44 ml par minute et de l'acide sulfurique dilué ($[H_2SO_4] = 17$ g/l) à un débit de 42,3 ml par minute, réglé de façon que le pH de la suspension de silice soit égal à $8,9 \pm 0,2$ à 90 °C. La bouillie de silice obtenue est ensuite amenée à pH = 3,5 par addition d'acide sulfurique dilué. Après filtration, lavage et séchage, on obtient une silice présentant les caractéristiques suivantes:

| | | |
|---|---|---|
| – Surface spécifique C.T.A.B | = 60 | $m^2/g$ |
| – Surface spécifique B.E.T. | = 60 | $m^2/g$ |
| – pH | = 6,1 | |
| – Prise d'huile DBP | = 380 | ml pour 100 g de silice |
| – Densité apparente | = 0,106 | $g/cm^3$ |
| – Densité apparente tapée | = 0,133 | $g/cm^3$ |

L'aire projetée moyenne en nombre des agrégats est de 27 000 $nm^2$.

Les particules élémentaires sphériques présentes dans les agrégats ont un diamètre moyen en nombre de 33 nm et un indice de polydispersité égal à 1,05.

Exemple 11

On prépare une silice de précipitation au terme de trois stades réactionnels successifs. On procède comme décrit à l'exemple 7 avec les différences suivantes:

– la solution colloïdale de silice sphérique étant formée à la fin de la première étape, on soutire 3 litres de cette solution. On introduit sur la solution colloïdale restant dans le réacteur 657 g de $Na_2SO_4$ en solution dans 1,87 litre d'eau. Cette introduction est réalisée en 2 minutes. On maintient à 90 °C sous agitation pendant 10 minutes supplémentaires la suspension obtenue.

On procède ensuite à l'addition simultanée (durée 90 minutes) de silicate de sodium aqueux ($[SiO_2] = 40$ g/l, rapport pondéral: $SiO_2/Na_2O = 3,25$), à un débit de 52,5 ml, débit réglé de façon que le pH de la suspension réactionnelle soit maintenu à $8,9 \pm 0,1$.

La bouillie de silice obtenue est amenée à pH = 3,5 par addition d'acide sulfurique dilué.

Après filtration, lavage à l'eau et séchage par atomisation, la silice recueillie présente les caractéristiques suivantes:

| | | |
|---|---|---|
| – Surface C.T.A.B. | = 45 | $m^2/g$ |
| – Surface B.E.T. | = 50 | $m^2/g$ |
| – Prise d'huile DBP | = 310 | ml pour 100 g de silice |
| – pH | = 6,3 | |
| – Vo | = 4,34 | $cm^3/g$ |
| – Densité apparente | = 0,17 | $g/cm^3$ |
| – Densité apparente tapée | = 0,20 | $g/cm^3$ |

L'aire projetée moyenne en nombre des agrégats est de 29 000 $nm^2$.

Les particules sphériques présentes dans les agrégats ont un diamètre moyen en nombre de 40 nm et un indice de polydispersité égal à 1,04.

Exemple 12

On prépare une silice de précipitation au terme de 3 opérations successives.

Premier stade réactionnel

On utilise un réacteur en acier inoxydable de volume égal à un litre muni d'un système d'agitation par turbine et muni d'un système de chauffage. Des pompes doseuses assurent l'alimentation des réactifs au sein du liquide réactionnel, en deux points distincts. Le réacteur comporte un système permettant l'évacuation en continu du produit de réaction de façon à maintenir un volume réactionnel constant et égal à 0,8 litre.

On introduit dans le réacteur 0,8 litre d'eau et on porte la température à 75 °C. On agite avec la turbine (vitesse de rotation: 1 000 tours par minute) et on procède à l'introduction simultanée:

– d'une solution aqueuse de silicate de sodium de rapport pondéral: $SiO_2/Na_2O$ égal à 3,25 et contenant 50 g de $SiO_2$ par litre.

On introduit cette solution à un débit de 22 ml par minute.

– d'une solution aqueuse d'acide sulfurique contenant 22,8 g de $H_2SO_4$ par litre. On introduit cette solution à un débit de 22 ml par minute.

Après 4 heures de fonctionnement on atteint le régime stationnaire: la concentration en silice dans le réacteur et les caractéristiques du colloïde formé n'évoluent plus comme le montrent l'examen par microscopie électronique à transmission et l'examen par diffusion de lumière du produit de réaction, effectués à intervalles réguliers entre la 4ème heure et la 100ème heure de fonctionnement.

Le colloïde de silice préparé ainsi de façon continue est constitué de particules sphériques dont les diamètres sont répartis à chaque instant entre 10 et 50 nanomètres. Le diamètre moyen en nombre est de 19 nm, le diamètre moyen en poids est de 33 nm.

Le colloïde soutiré et accumulé entre la 4ème heure et la 100ème heure de fonctionnement est utilisé dans le deuxième stade réactionnel. Pour les deuxième et troisième stades réactionnels, la température de réaction est de 90 °C et la vitesse d'agitation est de 110 tours par minute.

Deuxième stade réactionnel

Dans le réacteur de 20 l décrit à l'exemple 1, on introduit 3 litres de solution aqueuse contenant 450 g de $Na_2SO_4$. On porte la température de cette solution à 90 °C.

On introduit sur cette solution maintenue agitée par l'intermédiaire de la turbine tournant à 110 tours par minute, 8 litres de la solution colloïdale obtenue au premier stade réactionnel, préalablement chauffée à 90 °C et amenée à pH égal à 8 par introduction d'acide sulfurique dilué (350 ml de solution aqueuse contenant 100 g de $H_2SO_4$ par litre introduits en 10 minutes).

L'introduction de la solution colloïdale sur la solution aqueuse de $Na_2SO_4$ est réalisée en 9 minutes. Lorsque l'introduction est terminée, on laisse mûrir le mélange obtenu, 3 minutes sans agitation (110 tours/minute).

Troisième stade réactionnel

Au sein du produit réactionnel obtenu au terme du deuxième stade et maintenu sous agitation à 90 °C, on introduit de façon simultanée pendant 70 minutes:

— une solution aqueuse de silicate de sodium contenant 110 g de $SiO_2$ par litre et de rapport pondéral: $SiO_2/Na_2O$ égal à 3,25. Cette solution est introduite à raison de 25 ml par minute;

— une solution aqueuse d'acide sulfurique contenant 100 g par litre de $H_2SO_4$. Cette solution est introduite à raison de 13,5 ml par minute.

Après 70 minutes d'introduction simultanée des deux réactifs (silicate et acide), on arrête l'introduction de silicate. L'introduction d'acide sulfurique dilué est maintenue pendant 8 minutes à raison de 25 ml par minute. On obtient ainsi une bouillie de silice de pH égal à 3,5.

Après filtration, lavage et séchage, on obtient une poudre de silice présentant les caractéristiques suivantes:

| | | |
|---|---|---|
| — Surface spécifique B.E.T. | = 96 | $m^2/g$ |
| — Surface spécifique C.T.A.B. | = 95 | $m^2/g$ |
| — pH 5% | = 6,6 | |
| — Prise d'huile DBP | = 260 | ml pour 100 g de silice |
| — Densité tapée | = 0,17 | $g/cm^3$ |

L'observation par microscopie électronique à transmission montre que les agrégats de silice sont constitués de particules élémentaires sphériques de diamètre moyen en nombre égal à 26 nm et d'indice de polydispersité égal à 2.

L'analyse d'images montre que les agrégats présentent une aire moyenne projetée de 30 000 $nm^2$.

Le volume poreux inter-agrégat déterminé par porosité au mercure est de 1,15 $cm^3/g$.

Exemple 13

On utilise comme agent acide l'anhydride carbonique.

Premier stade réactionnel

On réalise la formation d'un colloïde de silice polydisperse de façon continue comme pour le premier stade de l'Exemple 12 mais en utilisant comme acide $CO_2$ à la place de $H_2SO_4$. Par rapport au premier stade de l'Exemple 12 les modifications sont les suivantes:

— température de réaction égale à 72 °C.
— introduction simultanée:

· de solution aqueuse de silicate de sodium contenant 25 g de $SiO_2$ par litre (rapport pondéral: $SiO_2/Na_2O$ égal à 3,25) à un débit de 200 ml par minute,
· de $CO_2$ pur à l'état gazeux à un débit de 1,53 g par minute.

On accumule le produit de réaction soutiré en continu entre 40 minutes et 6 heures de fonctionnement. Ce produit de réaction est un sol de silice polydisperse: les particules colloïdales sphériques ont un diamètre moyen en nombre de 19 nm et un diamètre moyen en poids de 37 nm.

Deuxième stade réactionnel

Dans le réacteur de 20 litres décrit à l'Exemple 1, on introduit 3 litres de solution aqueuse contenant 117 g de $Na_2CO_3$ et 277 g de $NaHCO_3$. On porte la température de cette solution à 90 °C.

On introduit sur cette solution maintenue sous agitation, 8 litres de la solution colloïdale obtenue au premier stade réactionnel, préalablement chauffée à 90 °C et amenée à pH égal à 8,4 par introduction de 36 g de $CO_2$ en 30 minutes.

L'introduction de cette solution colloïdale sur la solution aqueuse de $Na_2CO_3$ + $NaHCO_3$ est réalisée en 9 minutes. Lorsque cette introduction est terminée, on laisse mûrir sous agitation, pendant 3 minutes, le mélange réactionnel obtenu.

Troisième stade réactionnel

Au sein du produit réactionnel obtenu au terme du deuxième stade maintenu sous agitation à 90 °C, on introduit de façon simultanée pendant 70 minutes:

— une solution aqueuse de silicate de sodium (rapport pondéral: $SiO_2/Na_2O$ égal à 3,25) contenant 75 g de $SiO_2$ par litre à raison de 36 ml par minute,

— du $CO_2$ pur à l'état gazeux à raison de 1,2 g par minute.

La bouillie de silice obtenue est filtrée. Le gateau obtenu est lavé par 4 litres d'eau. Le produit obtenu après essorage est mis en suspension dans 3 litres d'eau. La bouillie résultante est portée à 60 °C. Le pH de cette bouillie est amené à pH égal 4 par introduction d'acide sulfurique dilué. La suspension de silice ainsi obtenue est filtrée, lavée et séchée.

Les caractéristiques de la silice séchée sont les suivantes:

| | | |
|---|---|---|
| – Surface B.E.T. | = 130 | $m^2/g$ |
| – Surface C.T.A.B. | = 82 | $m^2/g$ |
| – pH | = 6,8 | |
| – Prise d'huile D.B.P. | = 300 | ml pour 100 g de silice |
| – Densité tapée | = 0,128 | |

L'examen par microscopie électronique à transmission montre que les agrégats de silice sont constitués de particules sphériques de diamètre moyen en nombre de 25 nm et d'indice de polydispersité égal à 1,8.

L'aire moyenne projetée en nombre des agrégats est de 30 000 $nm^2$.

Le volume poreux inter-agrégat est de 1,10 $cm^3/g$.

## Revendications pour les Etats contractants: BE, CH, DE, FR, GB, IT, LI, LU, NL, SE

1. Procédé d'obtention d'une silice par réaction d'une solution aqueuse d'un silicate alcalin et d'un agent acidifiant par formation d'un pied de cuve renfermant une substance aqueuse et addition simultanée de l'agent acidifiant et de la solution de silicate alcalin, caractérisé par le fait que:

a) on réalise une addition à volume constant des réactifs et que l'on soutire en continu le milieu de la réaction, de manière à obtenir dans le volume constant un colloïde sphérique de silice monodisperse en taille de diamètre et dans le soutirage un colloïde de silice polydisperse en taille de diamètre,

b) on fait réagir au moins une partie du produit obtenu en a) avec un électrolyte,

c) on consolide le produit obtenu à l'étape b par addition d'une solution de silicate et d'un agent acidifiant.

2. Procédé selon la revendication 1, caractérisé par le fait que le colloïde à l'étape b correspond à une ou plusieurs fractions de colloïde issu du volume constant.

3. Procédé selon la revendication 1, caractérisé par le fait que le colloïde à l'étape b correspond à une ou plusieurs fractions du colloïde issu du soutirage.

4. Procédé selon l'une des revendications 1 à 3, caractérisé par le fait que le colloïde à l'étape b correspond à un mélange de fractions de colloïdes issus du volume constant et du soutirage.

5. Procédé selon l'une des revendications 1 à 4, caractérisé par le fait que le colloïde mis en oeuvre à l'étape b est obtenu avant l'établissement du régime stationnaire.

6. Procédé selon l'une des revendications 1 à 4, caractérisé par le fait que le colloïde mis en œuvre à l'étape b est obtenu à partir de l'établissement du régime stationnaire.

7. Procédé selon l'une des revendications 1 à 6, caractérisé par le fait que le séchage est réalisé en formant un écoulement puits-tourbillon symétrique, avec un gaz chaud, à grande quantité de mouvement et on introduit la suspension à sécher selon l'axe de symétrie de rotation de cet écoulement, dans la zone de dépression relative de cet écoulement, la quantité de mouvement dudit écoulement puits-tourbillon symétrique par rapport au flux axial de la suspension étant suffisante pour provoquer la rupture du flux axial, sa dispersion, sa prise en charge et son séchage.

8. Silice de précipitation, caractérisé par le fait qu'elle présente:

– une surface C.T.A.B. comprise entre 20 et 120 $m^2/g$,

– une prise d'huile DBP comprise entre 250 et 500 ml/100 g de silice,

– une aire projetée moyenne des agrégats supérieure à 8000 $nm^2$.

– un volume inter-agrégat élevé supérieur à 1 $cm^3/g$ et une population de pores inter-agrégat homogène.

9. Silice de précipitation selon la revendication 8, caractérisée par le fait qu'elle présente une aire projetée moyenne des agrégats supérieure à 15 000 $nm^2$.

## Revendications pour l'Etat contractant: AT

1. Procédé d'obtention d'une silice par réaction d'une solution aqueuse d'un silicate alcalin et d'un agent acidifiant par formation d'un pied de cuve renfermant une substance aqueuse et addition simultanée de l'agent acidifiant et de la solution de silicate alcalin, caractérisé par le fait que:

a) on réalise une addition à volume constant des réactifs et que l'on soutire en continu le milieu de la réaction, de manière à obtenir dans le volume constant un colloïde sphérique de silice monodisperse en taille de diamètre et dans le soutirage un colloïde de silice polydisperse en taille de diamètre,

b) on fait réagir au moins une partie du produit obtenu en a) avec un électrolyte,

c) on consolide le produit obtenu à l'étape b par addition d'une solution de silicate et d'un agent acidifiant.

2. Procédé selon la revendication 1, caractérisé par le fait que le colloïde à l'étape b correspond à une ou plusieurs fractions de colloïde issu du volume constant.

3. Procédé selon la revendication 1, caractérisé par le fait que le colloïde à l'étape b correspond à une ou plusieurs fractions du colloïde issu du soutirage.

4. Procédé selon l'une des revendications 1 à 3, caractérisé par le fait que le colloïde à l'étape b correspond à un mélange de fractions de colloïdes issus du volume constant et du soutirage.

5. Procédé selon l'une des revendications 1 à 4, caractérisé par le fait que le colloïde mis en œuvre à l'étape b est obtenu avant l'établissement du régime stationnaire.

6. Procédé selon l'une des revendications 1 à 4, caractérisé par le fait que le colloïde mis en œuvre à l'étape b est obtenu à partir de l'établissement du régime stationnaire.

7. Procédé selon l'une des revendications 1 à 6, caractérisé par le fait que le séchage est réalisé en formant un écoulement puits-tourbillon symétrique, avec un gaz chaud, à grande quantité de mouvement et on introduit la suspension à sécher selon l'axe de symétrie de rotation de cet écoulement, la quantité de mouvement dudit écoulement puits-tourbillon symétrique par rapport au flux axial de la suspension étant suffisante pour provoquer la rupture du flux axial, sa dispersion, sa prise en charge et son séchage.

## Patentansprüche für die Vertragsstaaten BE, CH, DE, FR, GB, IT, LI, LU, NL, SE

1. Verfahren zur Herstellung eines Siliciumdioxids durch Reaktion einer wässrigen Lösung eines Alkalisilikats und eines sauren Agens unter Bildung eines Ansatzes, der eine wässrige Substanz enthält und gleichzeitige Zugabe des sauren Agens und der Alkalisilikatlösung, dadurch gekennzeichnet, dass:

a) man eine Zugabe bei konstantem Volumen der Reaktanten durchführt und kontinuierlich das Reaktionsmilieu abzieht, so dass man in dem konstanten Volumen ein sphärisches Kolloid von in der Grösse des Durchmessers monodispersem Siliciumdioxid erhält und in dem Abgezogenen ein Kolloid von in der Grösse des Durchmessers polydispersem Siliciumdioxid,

b) man wenigstens einen Teil des bei a) erhaltenen Produkts mit einem Elektrolyten reagieren lässt,

c) man das in Schritt b erhaltene Produkt durch Addition einer Silikatlösung und eines sauren Agens verfestigt.

2. Verfahren nach Anspruch 1, dadurch gekennzeichnet, dass das Kolloid in Schritt b einer oder mehreren Fraktionen des aus dem konstanten Volumen hervorgegangenen Kolloids entspricht.

3. Verfahren nach Anspruch 1, dadurch gekennzeichnet, dass das Kolloid in Schritt b einer oder mehreren Fraktionen des in dem Abgezogenen erhaltenen Kolloids entspricht.

4. Verfahren nach einem der Ansprüche 1 bis 3, dadurch gekennzeichnet, dass das Kolloid in Schritt b einem Gemisch der Fraktionen der Kolloide entspricht, die aus dem konstanten Volumen und in dem Abgezogenen erhalten wurden.

5. Verfahren nach einem der Ansprüche 1 bis 4, dadurch gekennzeichnet, dass das in Schritt b umgesetzte Kolloid vor dem Sicheinstellen eines stationären Zustands erhalten wird.

6. Verfahren nach einem der Ansprüche 1 bis 4, dadurch gekennzeichnet, dass das in Schritt b umgesetzte Kolloid von dem Sicheinstellen eines stationären Zustandes an erhalten wird.

7. Verfahren nach einem der Ansprüche 1 bis 6, dadurch gekennzeichnet, dass das Trocknen bewirkt wird durch Bildung eines symmetrischen strudelförmigen, eine hohle Bewegungsgrösse aufweisenden Abflusses mit Hilfe eines warmen Gases und man die zu trocknende Suspension entlang der Symmetrieachse der Drehbewegung dieses Abflusses einführt, in der Zone relativen Unterdrucks dieses Abflusses, wobei die Bewegungsgrösse dieses symmetrischen strudelförmigen Abflusses im Verhältnis zum axialen Strom der Suspension ausreichend ist, um den Abbruch des axialen Stroms, seine Dispersion, seine Mitnahme und seine Trocknung zu bewirken.

8. Gefälltes Siliciumdioxid, dadurch gekennzeichnet, dass es aufweist:

– eine Oberfläche C.T.A.B., die zwischen 20 und 120 m²/g beträgt,

– eine Ölaufnahme (DBP) zwischen 250 und 500 ml/100 g Siliciumdioxid,

– eine mittlere projizierte Oberfläche der Aggregate oberhalb vom 8000 nm²,

– ein erhöhtes Interaggregatvolumen von mehr als 1 cm³/g und eine homogene Population der Interaggregatporen.

9. Gefälltes Siliciumdioxid gemäss Anspruch 8, dadurch gekennzeichnet, dass es eine mittlere projizierte Oberfläche der Aggregate von mehr als 15 000 nm² aufweist.

## Patentansprüche für den Vertragsstaat AT

1. Verfahren zur Herstellung eines Siliciumdioxids durch Reaktion einer wässrigen Lösung eines Alkalisilikats und eines sauren Agens unter Bildung eines Ansatzes, der eine wässrige Substanz enthält und gleichzeitige Zugabe des sauren Agens und der Alkalisilikatlösung, dadurch gekennzeichnet, dass:

a) man die Zugabe bei konstantem Volumen der Reaktanten durchführt und kontinuierlich das Reaktionsmilieu abzieht, so dass man in einem konstanten Volumen ein sphärisches Kolloid von in der Grösse des Durchmessers monodispersem Siliciumoxid erhält und in dem Abgezogenen ein Kolloid von in der Grösse des Durchmessers polydispersem Siliciumdioxid,

b) man wenigstens einen Teil des in Schritt a erhaltenen Produkts mit einem Elektrolyten reagieren lässt,

c) man das in Schritt b erhaltene Produkt durch Zugabe einer Lösung eines Silikats und eines sauren Agens verfestigt.

2. Verfahren nach Anspruch 1, dadurch gekennzeichnet, dass das Kolloid in Schritt b einer oder mehreren Fraktionen des in dem konstanten Volumen erhaltenen Kolloids entspricht.

3. Verfahren nach Anspruch 1, dadurch gekennzeichnet, dass das Kolloid in Schritt b einer oder mehreren Fraktionen des in dem Abgezogenen erhaltenen Kolloids entspricht.

4. Verfahren nach einem der Ansprüche 1 bis 3, dadurch gekennzeichnet, dass das Kolloid in Schritt b einem Gemisch der Fraktionen der Kolloide entspricht, die in dem konstanten Volumen und in dem Abgezogenen erhalten wurden.

5. Verfahren nach einem der Ansprüche 1 bis 4, dadurch gekennzeichnet, dass das in Schritt b umgesetzte Kolloid vor dem Sicheinstellen eines stationären Zustands erhalten wird.

6. Verfahren nach einem der Ansprüche 1 bis 4, dadurch gekennzeichnet, dass das in Schritt b umgesetzte Kolloid von dem Sicheinstellen eines stationären Zustandes an erhalten wird.

7. Verfahren nach einem der Ansprüche 1 bis 6, dadurch gekennzeichnet, dass das Trocknen bewirkt wird durch Bildung eines symmetrischen strudelförmigen eine hohle Bewegungsgrösse aufweisenden Abflusses, mit Hilfe eines warmen Gases, und dass man die zu trocknende Suspension entlang der Symmetrieachse der Rotation dieses Abflusses einführt, wobei dieses symmetrischen strudelförmigen Abflusses im Verhältnis zum axialen Strom der Suspension ausreichend ist, um den Abbruch des axialen Stroms, seine Dispersion, seine Mitnahme und seine Trocknung hervorzurufen.

**Claims for the Contracting States BE, CH, DE, FR, GB, IT, LI, LU, NL, SE**

1. A process for producing a silica by the reaction of an aqueous solution of an alkaline silicate and an acidifying agent by the formation of a bottoms containing an aqueous substance and simultaneous addition of the acidifying agent and the alkaline silicate solution, characterised by:

a) effecting addition of the reactants, at a constant volume, and continuously drawing off the reaction medium so as to obtain in the constant volume a spherical colloid of silica which is monodisperse in respect of size of diameter and in the drawn-off medium a colloid of silica which is polydisperse in respect of size of diameter,

b) reacting at least a portion of the substance obtained in step a with an electrolyte, and

c) consolidating the substance obtained in step b by the addition of a solution of silicate and an acidifying agent.

2. A process according to claim 1 characterised in that the colloid in step b corresponds to one or more fractions of colloid coming from the constant volume.

3. A process according to claim 1 characterised in that the colloid in step b corresponds to one or more fractions of the colloid coming from the drawn-off substance.

4. A process according to one of claims 1 to 3 characterised in that the colloid in step b corresponds to a mixture of fractions of colloids coming from the constant volume and from the drawn-off substance.

5. A process according to one of claims 1 to 4 characterised in that the colloid used in step b is obtained prior to a steady-state condition being established.

6. A process according to one of claims 1 to 4 characterised in that the colloid used in step b is obtained as from a steady-state condition being established.

7. A process according to one of claims 1 to 6 characterised in that the drying operation is effected by forming a symmetrical axial flow-vortex flow configuration with a hot gas with a large amount of momentum and the suspension to be dried is introduced along the axis of symmetry of rotation of said flow configuration into the region of relative depression of said flow configuration, the momentum of said symmetrical axial flow-vortex flow configuration with respect to the axial flow of the suspension being sufficient to cause the axial flow to be broken up, dispersed, taken over and dried.

8. Precipitation silica characterised in that it has:

– a CTAB surface area of between 20 and 120 $m^2/g$,

– a DBP oil absorption capability of between 250 and 500 ml/100 g of silica,

– a mean projected area of the aggregates of greater than 8000 $nm^1$, and

– a high inter-aggregate volume which is higher than 1 $cm^3/g$ and a homogeneous inter-aggregate pore population.

9. Precipitation silica according to claim 8 characterised in that it has a mean projected area of the aggregates of greater than 15 000 $nm^1$.

**Claims for the Contracting State AT**

1. A process for producing a silica by the reaction of an aqueous solution of an alkaline silicate and an acidifying agent by the formation of a bottoms containing an aqueous substance and simultaneous addition of the acidifying agent and the alkaline silicate solution, characterised by:

a) effecting addition of the reactants, at a constant volume, and continuously drawing off the reaction medium so as to obtain in the constant volume a spherical colloid of silica which is monodisperse in respect of size of diameter and in the drawn-off medium a colloid of silica which is polydisperse in respect of size of diameter,

b) reacting at least a portion of the substance obtained in step a with an electrolyte, and

c) consolidating the substance obtained in step b by the addition of a solution of silicate and an acidifying agent.

2. A process according to claim 1 characterised in that the colloid in step b corresponds to one or more fractions of colloid coming from the constant volume.

3. A process according to claim 1 characterised in that the colloid in step b corresponds to one or more fractions of the colloid coming from the drawn-off substance.

4. A process according to one of claims 1 to 3 characterised in that the colloid in step b corresponds to a mixture of fractions of colloids coming from the constant volume and from the drawn-off substance.

5. A process according to one of claims 1 to 4 characterised in that the colloid used in step b is obtained prior to a steady-state condition being established.

6. A process according to one of claims 1 to 4 characterised in in that the colloid used in step b is obtained as from a steady-state condition being established.

7. A process according to one of claims 1 to 6 characterised in that the drying operation is effected by forming a symmetrical axial flow-vortex flow configuration with a hot gas with a large amount of momentum and the suspension to be dried is introduced along the axis of symmetry of rotation of said flow configuration, the momentum of said symmetrical axial flow-vortex flow configuration with respect to the axial flow of the suspension being sufficient to cause the axial flow to be broken up, dispersed, taken over and dried.

EP 0 170 579 B1

1/6

100nm

FIG. 1

15

2/6

50 nm

FIG. 2.

3/6

50nm

FIG. 3.

FIG.4

FIG.5

FIG.6